# DEMANDE DE BREVET EUROPEEN

(11) **EP 1 060 955 A1**
(43) Date de publication de la demande: **20.12.2000**
(21) Numéro de dépôt: 00440172.5
(22) Date de dépôt: 14.06.2000
(51) Int. Cl.: B60R 19/52, B62D 25/12, E05B 65/19

(54) **Bloc calandre pour un capot d'un véhicule.**

(30) Priorité: 15.06.1999 FR 9907692
(71) Demandeur: M.G.I. Coutier S.A., 01410 Champfromier (FR)
(72) Inventeur: Benoit, Dominique, 25420 Bart (FR); Haigazian, Gérald, 68130 Aspach (FR)
(74) Mandataire: Nithardt, Roland

(57) **Abrégé**

La présente invention concerne un bloc calandre simple et peu coûteux, qui se monte facilement et rapidement sur le capot du véhicule et qui nécessite un minimum de réglage.

Le bloc calandre (10) pour un capot (11) d'un véhicule, notamment d'un véhicule automobile, comporte de manière intégrée une calandre (12) réalisée en matière synthétique, au moins une gâche (13) destinée à coopérer avec un verrou solidaire d'un élément de carrosserie et un organe d'accrochage destinée à coopérer avec un organe d'arrêt solidaire dudit élément de carrosserie. Ce bloc calandre (10) constitue un module d'équipements pré assemblés prêt à être monté sur ledit capot.

## Description

La présente invention concerne un bloc calandre pour un capot d'un véhicule, notamment d'un véhicule automobile, ce bloc calandre comprenant une calandre, au moins une gâche destinée à coopérer avec un verrou solidaire d'un élément de carrosserie et un organe d'accrochage destiné à coopérer avec un organe d'arrêt solidaire dudit élément de carrosserie.

On connaît déjà des blocs calandre tels que du type défini ci-dessus. La calandre, la gâche et l'organe d'accrochage forment des pièces totalement distinctes qui sont montées séparément sur le capot du véhicule. Ces blocs calandre présentent divers inconvénients. Le nombre de pièces séparées est élevé, ce qui complique la gestion, le transport et le stockage de ces pièces. Le montage du bloc calandre est long et difficile car il est nécessaire de positionner les différentes pièces les unes par rapport aux autres avant de les fixer sur le capot, ou de les fixer individuellement directement sur le capot, puis de les régler par rapport aux pièces complémentaires prévues sur l'élément de carrosserie. De ce fait, les blocs calandre de l'art antérieur sont coûteux, ne permettent pas d'intégrer différentes fonctions et sont inadaptés aux exigences actuelles des constructeurs automobiles.

Le but de la présente invention est de pallier ces divers inconvénients en fournissant un bloc calandre simple et peu coûteux, qui se monte facilement et rapidement sur le capot du véhicule et qui nécessite un minimum de réglage.

Ce but est atteint par un bloc calandre tel que décrit en préambule, caractérisé en ce que ladite calandre est pourvue de ladite gâche et dudit organe d'accrochage de sorte que ledit bloc calandre constitue un module d'équipements pré assemblés prêt à être monté sur ledit capot.

Le bloc calandre peut comprendre des moyens de poussée agencés pour solliciter ledit capot dans une direction opposée audit élément de carrosserie.

Selon un mode de réalisation avantageux, le bloc calandre comporte des éléments de montage de ladite gâche et dudit organe d'accrochage.

Ladite calandre comprend de préférence un corps réalisé en une matière synthétique et comprenant lesdits éléments de montage.

Ledit corps peut comporter une paroi frontale, ayant au moins un passage d'air, et un rebord supérieur, au moins ledit rebord supérieur étant agencé pour être fixé audit capot.

Selon une forme de réalisation préférée, ledit rebord supérieur comporte, dans sa face inférieure, un logement de forme générale rectangulaire, et lesdits éléments de montage de la gâche comportent, pour chaque gâche, un support de gâche de forme générale rectangulaire logé dans ledit logement.

Selon un mode de réalisation particulier, ledit support de gâche comporte au moins un trou de passage de vis et ledit rebord supérieur comportant une ouverture supérieure ménagée au fond dudit logement en regard dudit trou de passage de vis, ledit support de gâche et ledit rebord supérieur étant agencés pour être fixés simultanément audit capot par une vis de fixation engagée dans le trou de passage de vis au travers de ladite ouverture supérieure.

Ledit logement comporte, avantageusement, plusieurs languettes de maintien réparties sur son pourtour et destinées à maintenir ledit support de gâche, les dimensions longitudinale et transversale dudit logement étant supérieures aux dimensions longitudinale et transversale dudit support de gâche afin de définir un jeu de montage x dans une direction longitudinale et un jeu de montage y dans une direction transversale entre les faces latérales du logement et les faces latérales correspondantes du support de gâche.

De préférence, le support de gâche comporte un décrochement supérieur sensiblement rectangulaire, le trou de passage de vis étant ménagé dans ce décrochement, l'ouverture supérieure présentant aussi une forme sensiblement rectangulaire, et les dimensions longitudinale et transversale de ladite ouverture supérieure sont supérieures aux dimensions longitudinale et transversale dudit décrochement supérieur afin de définir un jeu de montage x dans une direction longitudinale et un jeu de montage y dans une direction transversale entre les faces latérales de l'ouverture supérieure et les faces latérales correspondantes du décrochement supérieur.

Ledit support de gâche peut être surmoulé dans ledit logement et être lié rigidement audit rebord supérieur, ledit trou de passage de vis ayant une section de forme générale rectangulaire, les dimensions longitudinale et transversale dudit trou de passage de vis étant supérieures au diamètre de la vis de fixation, définissant un jeu de montage x dans une direction longitudinale et un jeu de montage y dans une direction transversale.

Selon un mode de réalisation préféré, ladite paroi frontale du bloc calandre est agencée pour recevoir une garniture décorative, ladite garniture décorative et ladite paroi frontale comportant ensemble au moins deux éléments de fixation complémentaires d'un dispositif de raccordement rapide.

La présente invention et ses avantages apparaîtront mieux dans la description suivante de différents modes de réalisation de l'invention, en références aux dessins annexés, dans lesquels:
- la figure 1 représente schématiquement en vue frontale le bloc calandre de la présente invention monté sur le capot d'un véhicule automobile;
- la figure 2 est une vue en perspective du bloc calandre de la figure 1;
- la figure 3 est une vue latérale éclatée du bloc calandre de la figure 1;
- la figure 4 est une vue de dessus d'une partie du bloc calandre de la figure 3;
- la figure 5 est une vue latérale d'une variante du bloc calandre de la figure 1; et
- la figure 6 est une vue frontale d'un autre mode de réalisation du bloc calandre de l'invention monté sur le capot d'un véhicule automobile.

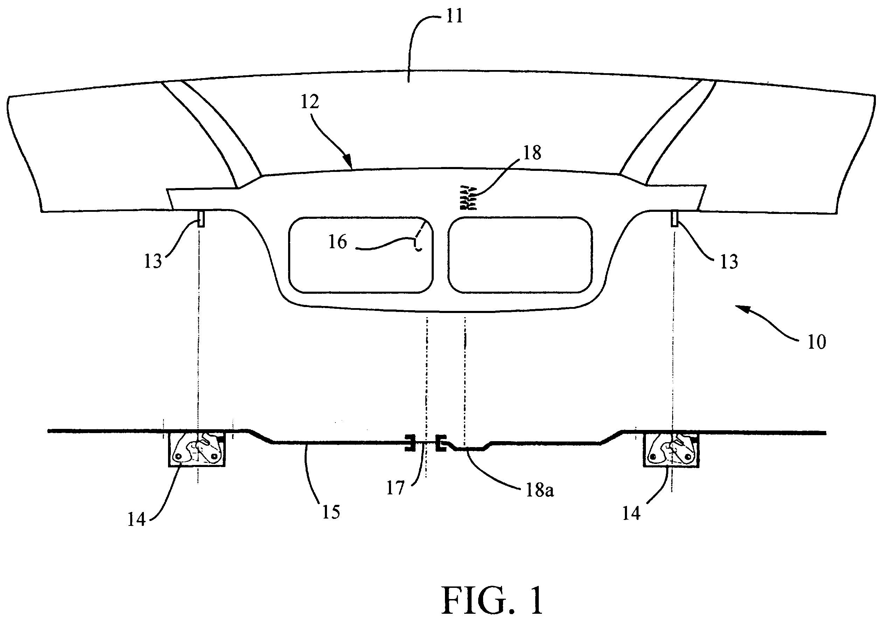

La figure 1 représente le bloc calandre 10 de la présente invention monté sur un capot 11 d'un véhicule automobile. Il comprend une calandre 12 et deux gâches 13 d'un dispositif de verrouillage du capot 11. Ces gâches sont du type dit "gâche à fil" par exemple. Elles sont agencées pour coopérer avec deux verrous 14 complémentaires du type dit "verrou à mécanisme pène-cliquet" par exemple. Ces verrous 14 sont solidaires d'un élément de carrosserie 15 du véhicule, tel qu'une traverse avant du compartiment moteur par exemple. Le bloc calandre 10 comprend un organe d'accrochage 16, tel qu'un crochet par exemple, de sécurité à l'ouverture du capot 11. Le crochet 16 est mobile et est agencé pour être en prise avec un organe d'arrêt 17, tel qu'une tige par exemple, solidaire de la traverse 15. Le bloc calandre 10 comprend également des moyens de poussée 18, tels qu'un ressort de compression par exemple. Le ressort 18 est agencé pour s'appuyer sur une butée de ressort 18a ménagée sur la traverse 15 et solliciter le capot 11 dans une direction opposée à la traverse de manière à le soulever lors du déverrouillage des verrous 14.

Le bloc calandre 10 comprend les deux gâches 13, le crochet 16 et le ressort 18. Il comporte des éléments de montage qui supportent les gâches 13, le crochet 16 et le ressort 18, respectivement, de sorte qu'il constitue un module d'équipements pré assemblés prêt à être monté sur le capot 11.

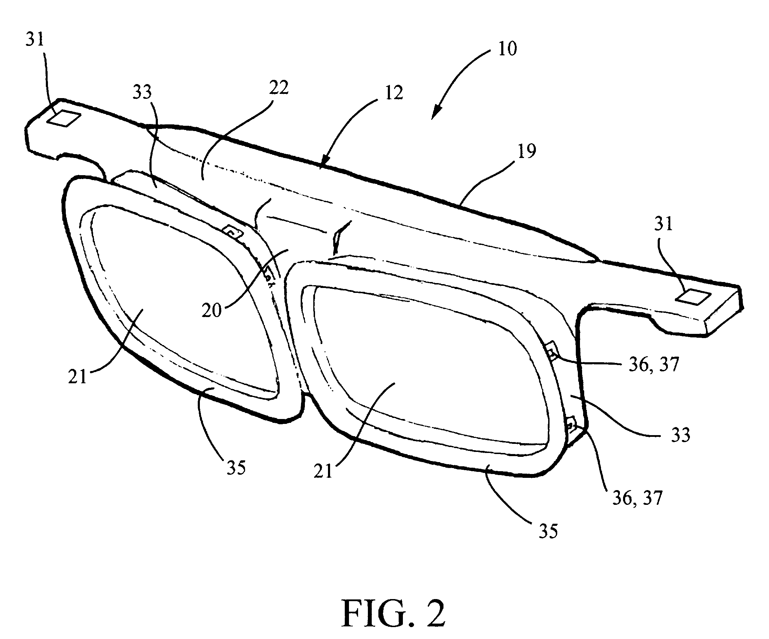

La calandre 12 du bloc calandre 10, mieux représentée sur la figure 2, comporte un corps 19 réalisé par exemple dans une matière synthétique moulée. Le corps 19 comporte une paroi frontale 20 profilée, ayant deux larges passages d'air 21 de forme sensiblement arrondie, qui comportent chacun une grille de protection interne par exemple. Le corps 19 comporte un rebord supérieur 22 allongé, sensiblement perpendiculaire à la paroi frontale 20, et s'étendant derrière celle-ci et au-delà de ses deux côtés opposés, de façon sensiblement symétrique par exemple.

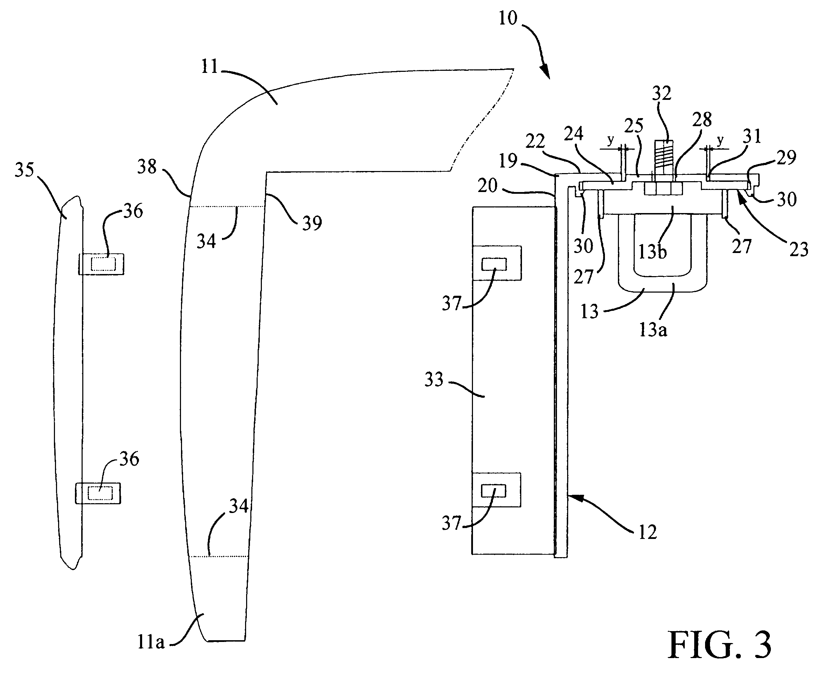

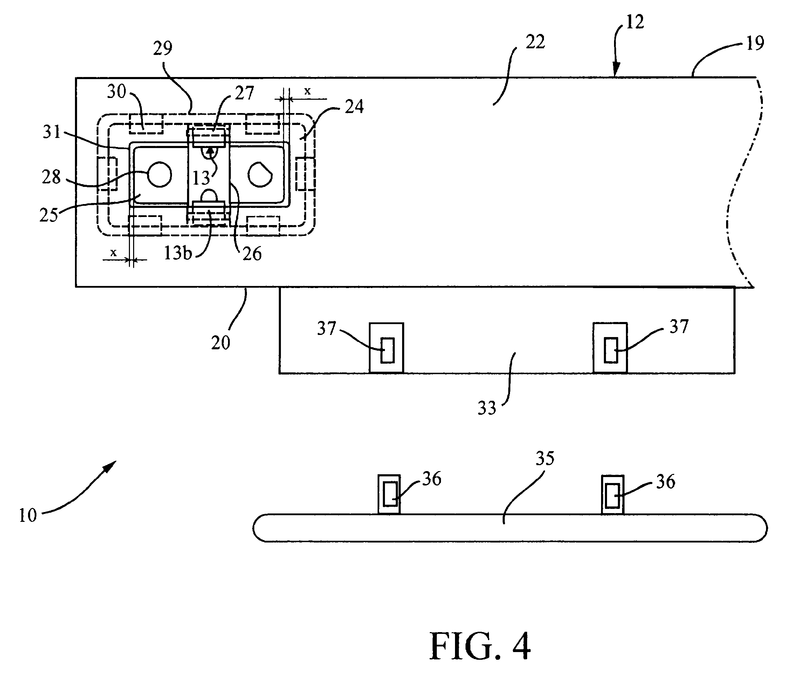

En référence aux figures 3 et 4, chaque gâche 13 comporte un fil de gâche 13a en forme de U solidaire d'un axe de gâche 13b. Elle est liée à un support de gâche 23 de forme générale parallélépipédique. Celui-ci comporte une plaque rectangulaire 24 pourvue d'un décrochement supérieur 25 central et rectangulaire. Le support de gâche 23 comporte une fente médiane 26 ménagée transversalement dans la plaque 24 et le décrochement 25, pour le passage de la gâche 13. Il comporte deux brides 27, disposées de part et d'autre de la fente 26. Les brides 27 supportent l'axe de gâche 13b et ont une section longitudinale en forme de demi anneau ou de V par exemple autorisant le pivotement de la gâche 13 autour de son axe 13b. Le support de gâche 23 comporte également deux trous de passage de vis 28, sensiblement cylindriques par exemple, ménagés dans le décrochement supérieur 25, symétriquement de part et d'autre de la fente médiane 26. La gâche 13 s'étend à travers la fente 26 sensiblement perpendiculairement à et en dessous de la plaque 24, l'axe de gâche 13b reposant sur les deux brides 27.

Le rebord supérieur 22 de la calandre 12 comporte deux logements 29 sensiblement rectangulaires, disposés dans ses deux extrémités opposées. Les logements 29 sont ménagés en dessous du rebord supérieur 22 de sorte qu'ils débouchent dans la face inférieure de celui-ci. Chaque plaque 24 d'un support de gâche 23 est logée dans un logement 29 respectif. Les dimensions longitudinale et transversale du logement 29 sont sensiblement supérieures aux dimensions longitudinale et transversale de la plaque 24. La profondeur du logement 29 est sensiblement égale à l'épaisseur de la plaque 24. Le logement 29 comporte plusieurs languettes de maintien 30 réparties sur son pourtour et faisant saillie sous ce logement pour maintenir la plaque 24 dans ledit logement 29. Ces languettes de maintien 30 présentent des bords inférieurs chanfreinés pour faciliter l'emboîtement de la plaque 24.

En référence aux figures 2 à 4, le rebord supérieur 22 comporte une ouverture supérieure 31 de forme sensiblement rectangulaire ménagée au fond de chaque logement 29. Chaque ouverture supérieure 31 reçoit le décrochement supérieur 25 du support de gâche 23 correspondant. Les dimensions longitudinale et transversale de l'ouverture supérieure 31 sont légèrement supérieures aux dimensions longitudinale et transversale du décrochement supérieur 25, définissant un jeu de montage x dans une direction longitudinale et un jeu de montage y dans une direction transversale entre les faces latérales de l'ouverture 31 et les faces latérales correspondantes du décrochement supérieur 25.

Les jeux de montage x et y permettent une certaine mobilité du support de gâche 23 dans son logement 29 dans le but notamment de rattraper les dispersions de cote inévitables dans toutes pièces réalisées en matière synthétique moulée. Grâce à cette mobilité, il est possible de placer les trous de passage de vis 28 du support de gâche 23 en regard des trous filetés correspondants ménagés dans le capot 11 lors du montage du bloc calandre 10 sur ledit capot 11. Le rebord supérieur 22 de la calandre 12 et le support de gâche 23, ainsi que la gâche 13, sont fixés sur le capot 11 par des vis de fixation 32 engagées dans les trous de passage de vis 28. Pour permettre le serrage du rebord supérieur 22 de la calandre 12 sur le capot 11, l'épaisseur des bords de l'ouverture 31 est légèrement supérieure à l'épaisseur du décrochement supérieur 25 du support de gâche 23 correspondant par exemple.

Les gâches 13 sont réglables en position par rapport aux verrous 14 correspondants, solidaires de la traverse 15. En effet, les axes de gâche 13b peuvent pivoter dans les fentes 26 tant que les vis de fixation 32 ne sont pas serrées. Lorsque les vis sont serrées, les axes de gâche 13b sont pressés contre le fond du logement 29 par les brides 27 du support de gâche 23 et les gâches 13 sont bloquées en position.

La paroi frontale 20 du corps 19 de la calandre 12 comporte deux manchons de raccordement 33, chacun disposé à la périphérie d'un passage d'air 21. Ces manchons 33 sont agencés pour être engagés dans deux orifices 34 complémentaires, ménagés dans une partie plongeante 11a du capot 11 formant le nez de celui-ci. Ces manchons 33 sont également agencés pour recevoir par l'extérieur du capot 11, une garniture décorative formée de deux anneaux 35 en métal, par exemple, tel qu'un métal chromé. Chaque manchon 33 et son anneau 35 correspondant comportent ensemble des éléments de fixation complémentaires d'un dispositif de raccordement rapide. Les anneaux 35 comportent par exemple des ergots d'accrochage 36 ménagés à leur périphérie. Ces ergots 36 sont agencés pour s'engager dans des lumières d'arrêt 37 correspondantes ménagées sur le pourtour des manchons de raccordement 33. Les anneaux 35 sont agencés pour s'appuyer sur la face extérieure 38 du nez 11a et ainsi fixer la calandre 12 sur le capot 11.

En référence à la figure 1, le crochet 16 de sécurité à l'ouverture du capot 11 est monté derrière la paroi frontale 20 de la calandre 12. Il est agencé pour pivoter autour d'un axe de rotation fixe lié au corps 19 par exemple. Le crochet 16 comporte également un levier d'actionnement agencé pour faire pivoter ce crochet, de manière à le décrocher de la tige d'arrêt 17 solidaire de la traverse 15, pour libérer le capot 11.

Le ressort de compression 18 est agencé pour s'appuyer sur la butée de ressort 18a ménagée sur la traverse 15 et soulever légèrement le capot 11 lors du déverrouillage des verrous 14. Il est par exemple monté sur un téton de maintien solidaire du corps 19.

Le montage du bloc calandre 10 de la présente invention, qui intègre toutes les pièces, à savoir les deux gâches 13, le crochet 16 et le ressort 18, s'effectue de la façon suivante. Un opérateur introduit les deux manchons de raccordement 33 de la paroi frontale 20 du corps 19 dans les deux orifices 34 correspondants du nez 11 a du capot 11. Il amène, par l'extérieur du capot 11, les anneaux 35 en regard des manchons 33 et emboîte les ergots d'accrochage 36 dans les lumières d'arrêt 37 correspondantes. Le bloc calandre 10 est alors fixé sur le nez 11a du capot 11. L'opérateur introduit les vis 32 dans les trous 28 positionnés en regard des trous filetés correspondants ménagés dans le capot 11. Il visse les vis de fixation 32 dans le capot 11 pour fixer le bloc calandre 10 en bloquant simultanément les supports de gâche 23 et les gâches 13. Si les trous 28 ne sont pas en regard des trous filetés prévus dans le capot 11, l'opérateur peut, avant le serrage des vis de fixation 32, déplacer les supports de gâche 23 dans leur logement 29 par coulissement selon les axes x et y. De même, si les fils de gâche 13a ne sont pas positionnés correctement par rapport aux verrous 14, l'opérateur peut, avant le serrage des vis de fixation 32, pivoter les gâches 13 autour de leur axe 13b correspondant.

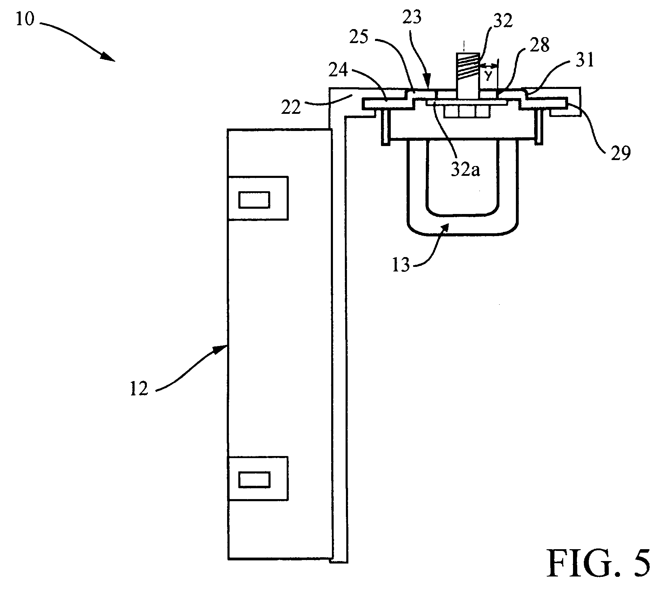

La figure 5 représente une variante du mode de réalisation décrit précédemment. Chaque support de gâche 23 est surmoulé dans le rebord supérieur 22 de la calandre 12 et est lié rigidement à celui-ci. La plaque 24 et le décrochement supérieur 25 sont ainsi montés serrés respectivement dans le logement 29 et dans l'ouverture supérieure 31, ayant des formes complémentaires. Les trous de passage de vis 28 ont alors une section carrée ou rectangulaire. Chaque trou 28 a des dimensions longitudinale et transversale légèrement supérieures au diamètre de la vis de fixation 32, définissant un jeu de montage x dans une direction longitudinale et un jeu de montage y dans une direction transversale entre les faces latérales du trou 28 et celles de la vis 32, ces jeux de montage étant destinés à rattrapper les dispersions de cote. Chaque vis 32 vient s'appuyer sur une rondelle 32a disposée sous le décrochement supérieur 25 du support de gâche 23 par exemple.

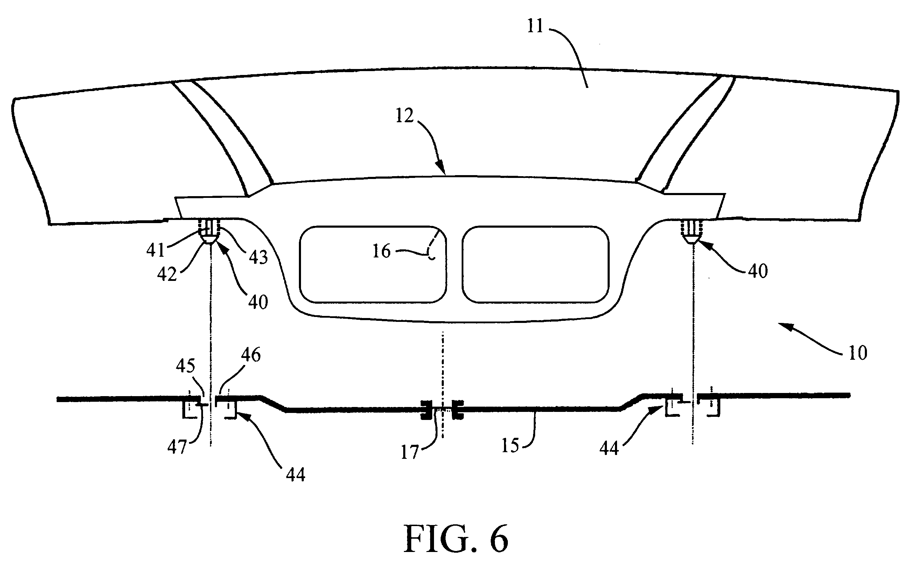

La figure 6 représente un autre mode de réalisation du bloc calandre 10 de la présente invention qui se différencie du mode de réalisation décrit précédemment par un dispositif de verrouillage du capot 11 différent.

Les deux gâches 40 sont du type dit "gâche à champignon". Elles comportent chacune, de manière connue, un pion cylindrique 41 pourvu d'une tête d'extrémité tronconique 42 présentant une face d'introduction et une face d'arrêt. Le pion cylindrique 41 est lié, vissé par exemple, au support de gâche 23 emboîté ou surmoulé dans le logement 29 correspondant du rebord supérieur 22 de la calandre 12. La gâche 40 est agencée pour être réglée en position par rapport à son support de gâche 23 selon une direction sensiblement perpendiculaire à celui-ci, en vissant ou en dévissant le pion 41 par exemple. Chaque gâche 40 comporte également un ressort de compression 43 placé autour du pion 41 entre le support de gâche 23 et la tête tronconique 42, le diamètre extérieur du ressort 43 étant légèrement supérieur au diamètre maximum de la tête 42.

Chaque gâche est agencée pour coopérer avec un verrou 44 du type dit "verrou à guillotine" solidaire de la traverse 15. Le verrou 44 comporte, de manière connue, un passage de gâche 45 agencé pour recevoir la gâche 40. Les dimensions transversales de ce passage 45 sont inférieures au diamètre extérieur du ressort de compression 43, les bords de ce passage de gâche 45 définissant une butée de ressort 46. Le verrou 44 comporte un doigt de verrouillage 47 rétractable, sensiblement perpendiculaire au passage de gâche 45, agencé pour être en prise avec la face d'arrêt de la tête tronconique 42 de la gâche 40.

Lorsque le capot 11 est verrouillé, les ressorts de compression 43 s'appuient sur les butées de ressort 46 respectives pour solliciter le capot 11 dans une direction opposée à la traverse 15 de manière à soulever légèrement celui-ci lors du déverrouillage des verrous 44. Ces deux ressorts 43 remplacent, par conséquent, le ressort de compression 18 décrit précédemment en référence à la figure 1.

Le montage du bloc calandre 10 sur le capot 11 du véhicule est similaire à celui décrit précédemment.

Le bloc calandre 10 de la présente invention a de nombreux avantages. Il est simple et peu coûteux à fabriquer. Il constitue un module d'équipements pré assemblés, comprenant notamment la calandre 12, les gâches 13 ou 40, le crochet de sécurité 16, et le(s) ressort(s) 18 ou 43 d'ouverture du capot 11, qui se monte facilement et rapidement sur le capot 11 du véhicule, avec un minimum de réglage. De ce fait, ce bloc calandre 10 peut être monté sur le capot 11 du véhicule par un seul ouvrier. Le bloc calandre 10 de la présente invention propose une solution technique particulièrement économique, bien adaptée aux exigences actuelles des constructeurs automobiles.

La présente invention n'est pas limitée aux modes de réalisation décrits précédemment, mais s'étend à toutes modifications et variantes évidentes pour l'homme du métier.

## Revendications

1. Bloc calandre (10) pour un capot (11) d'un véhicule, notamment d'un véhicule automobile, ce bloc calandre comprenant une calandre (12), au moins une gâche (13; 40) destinée à coopérer avec un verrou (14; 44) solidaire d'un élément de carrosserie (15) et un organe d'accrochage (16) destinée à coopérer avec un organe d'arrêt (17) solidaire dudit élément de carrosserie (15), caractérisé en ce que ladite calandre (12) est pourvue de ladite gâche (13; 40) et dudit organe d'accrochage (16) de sorte que ledit bloc calandre (10) constitue un module d'équipements préassemblés prêt à être monté sur ledit capot.

2. Bloc calandre selon la revendication 1, caractérisé en ce qu'il comprend des moyens de poussée (18; 43) agencés pour solliciter ledit capot dans une direction opposée audit élément de carrosserie (15).

3. Bloc calandre selon la revendication 1, caractérisé en ce qu'il comporte des éléments de montage de ladite gâche (13; 40) et dudit organe d'accrochage (16).

4. Bloc calandre selon la revendication 3, caractérisé en ce que la calandre (12) comporte un corps (19) réalisé en une matière synthétique et comprenant lesdits éléments de montage.

5. Bloc calandre selon la revendication 4, caractérisé en ce que ledit corps (19) comporte une paroi frontale (20), ayant au moins un passage d'air (21), et un rebord supérieur (22), et en ce qu'au moins ledit rebord supérieur (22) est agencé pour être fixé audit capot (11).

6. Bloc calandre selon la revendication 5, caractérisé en ce que ledit rebord supérieur (22) comporte, dans sa face inférieure, un logement (29) de forme générale rectangulaire et en ce que lesdits éléments de montage de ladite gâche (13; 40) comportent, pour chaque gâche, un support de gâche (23) de forme générale rectangulaire logé dans ledit logement (29).

7. Bloc calandre selon la revendication 6, caractérisé en ce que ledit support de gâche (23) comporte au moins un trou de passage de vis (28), en ce que ledit rebord supérieur (22) comporte une ouverture supérieure (31) ménagée au fond dudit logement (29) en regard dudit trou de passage de vis (28), et en ce que ledit support de gâche (23) et ledit rebord supérieur (22) sont agencés pour être fixés simultanément audit capot (11) par une vis de fixation (32) engagée dans ledit trou de passage de vis (28) au travers de ladite ouverture supérieure (31).

8. Bloc calandre selon la revendication 7, caractérisé en ce que ledit logement (29) comporte plusieurs languettes de maintien (30) réparties sur son pourtour et destinées à maintenir ledit support de gâche (23) dans son logement, et en ce que les dimensions longitudinale et transversale dudit logement (29) sont supérieures aux dimensions longitudinale et transversale dudit support de gâche (23) afin de définir un jeu de montage x dans une direction longitudinale et un jeu de montage y dans une direction transversale entre les faces latérales du logement (29) et les faces latérales correspondantes du support de gâche (23).

9. Bloc calandre selon la revendication 8, caractérisé en ce que ledit support de gâche (23) comporte un décrochement supérieur (25) sensiblement rectangulaire, le trou de passage de vis (28) étant ménagé dans ce décrochement, en ce que l'ouverture supérieure (31) présente aussi une forme sensiblement rectangulaire, et en ce que les dimensions longitudinale et transversale de ladite ouverture supérieure (31) sont supérieures aux dimensions longitudinale et transversale dudit décrochement supérieur (25) afin de définir un jeu de montage x dans une direction longitudinale et un jeu de montage y dans une direction transversale entre les faces latérales de l'ouverture supérieure (31) et les faces latérales correspondantes du décrochement supérieur (25).

10. Bloc calandre selon la revendication 7, caractérisé en ce que ledit support de gâche (23) est surmoulé dans ledit logement (29) et est lié rigidement audit rebord supérieur (22), et en ce que ledit trou de passage de vis (28) a une section de forme générale rectangulaire, les dimensions longitudinale et transversale dudit trou de passage de vis (28) étant supérieures au diamètre de la vis de fixation (32), définissant un jeu de montage x dans une direction longitudinale et un jeu de montage y dans une direction transversale.

11. Bloc calandre selon la revendication 5, caractérisé en ce que ladite paroi frontale (20) du corps (19) de la calandre (12) est agencée pour recevoir une garniture décorative (35), et en ce que ladite garniture décorative (35) et ladite paroi frontale (20) comportent ensemble au moins deux éléments de fixation (36, 37) complémentaires d'un dispositif de raccordement rapide.
